# EUROPÄISCHE PATENTSCHRIFT

(11) **EP 1 336 242 B1**
(45) Veröffentlichungstag und Bekanntmachung des Hinweises auf die Patenterteilung: **19.01.2005**
(21) Anmeldenummer: 01997887.3
(22) Anmeldetag: 16.11.2001
(51) Int. Cl.: H02M 7/537, H02M 5/27

(54) **VERFAHREN ZUR STEUERUNG EINES MATRIXUMRICHTERS**
METHOD FOR CONTROLLING A MATRIX CONVERTER
PROCEDE DE COMMANDE D'UN CONVERTISSEUR MATRICIEL

(30) Priorität: 22.11.2000 DE 10057785
(43) Veröffentlichungstag der Anmeldung: 20.08.2003
(73) Patentinhaber: SIEMENS AKTIENGESELLSCHAFT, 80333 München (DE)
(72) Erfinder: SIMON, Olaf, 76646 Bruchsal (DE); MAHLEIN, Jochen, 76139 Karlsruhe (DE)
(86) Internationale Anmeldenummer: PCT/DE2001/004323
(87) Internationale Veröffentlichungsnummer: WO 2002/043235

(56) Entgegenhaltungen:
- DE-C- 19 504 690
- GB-A- 2 048 588
- US-A- 4 041 368
- US-A- 5 594 636

## Beschreibung

Die Erfindung bezieht sich auf ein Verfahren zur Steuerung eines Matrixumrichters mit neun in einer 3x3-Schaltermatrix angeordneten bidirektionalen Leistungsschalter.

Bei einem Matrixumrichter handelt es sich um einen selbstgeführten Direktumrichter. Er ermöglicht die Umformung eines starren Drehstromnetzes in ein System mit variabler Spannung und Frequenz. Durch die Anordnung der bidirektionalen Leistungsschalter in einer 3x3-Schaltermatrix kann jeweils eine der drei Ausgangsphasen des Matrixumrichters elektrisch mit einer Eingangsphase verbunden werden. Eine Phase des Matrixumrichters besteht aus einer Anordnung aus drei bidirektionalen Leistungsschaltern, die einerseits jeweils mit einer Eingangsphase und andererseits mit einer Ausgangsphase verbunden sind. Eine derartige Anordnung'wird auch als 3xl-Schaltermatrix bezeichnet. Der Matrixumrichter benötigt keinen Zwischenkreis. Der selbstgeführte Direktumrichter bietet den Vorteil, dass er bedingt durch die Topologie rückspeisefähig ist und durch eine entsprechend ausgeprägte Steuerung sinusförmige Netzströme erreicht.

Die bidirektionalen Leistungsschalter des Matrixumrichters weisen jeweils zwei antiseriell geschaltete Halbleiterschalter auf. Als Halbleiterschalter werden vorzugsweise Insulated-Gate-Bipolar-Transistoren (IGBT) verwendet, die jeweils eine antiparallele Diode aufweisen. Derartig ausgebildete bidirektionale Leistungsschalter werden vorzugsweise bei Umrichtern für kleine und mittlere Leistungen verwendet. Durch die Ansteuerung dieser Halbleiterschalter der bidirektionalen Leistungsschalter wird jeweils ein Strompfad in einer durch die Anordnung der Halbleiterschalter bestimmten Richtung durchgeschaltet. Sind beide Halbleiterschalter eines bidirektionalen Leistungsschalters angesteuert, so ist dieser bidirektional eingeschaltet und es wird ein Stromfluss in beide Richtungen ermöglicht. Dadurch entsteht eine sichere elektrische Verbindung zwischen einer Eingangs- und Ausgangsphase des Matrixumrichters. Wird nur ein Halbleiterschalter eines bidirektionalen Leistungsschalters angesteuert, so ist dieser unidirektional eingeschaltet und es entsteht eine elektrische Verbindung zwischen einer Eingang- und Ausgangsphase des Matrixumrichters nur für eine bevorzugte Stromrichtung.

Durch eine gezielte zeitliche Abfolge von Schalterstellungskombinationen innerhalb einer Modulationsperiode kann im zeitlichen Mittel eine in Grenzen beliebige Ausgangsspannung erzeugt werden. Aufgabe einer Steuerung eines Matrixumrichters ist es, aus Kenntnis des Eingangsspannungs-Raumzeigers und einem Sollwert für den Ausgangsspannungs-Raumzeiger die geeignete Schaltkombination zu errechnen.

Bisher bekannte Steuerverfahren arbeiten entweder nach dem phasenorientierten oder dem raumzeigerorientierten Verfahren.

Das phasenorientierte Steuerverfahren ist in der Veröffentlichung "Analysis and Design of Optimum-Amplitude Nine-Switch Direct AC-AC Converters", von Alberto Alesina und Marco G.B. Venturini, abgedruckt in IEEE Transactions on Power Electronics, Band 4, Nr. 1, Januar 1989, Seiten 101 bis 112, näher beschrieben, wogegen in der Veröffentlichung "Space Vector Modulated Three-Phase to Three-Phase Matrix Converter with Input Power Factor Correction", von László Huber und Du 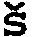 an Borejevi 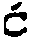 , abgedruckt in IEEE Transaction on Industry Applications, Band 31, Nr. 6, Nov./Dez. 1995, Seiten 1234 bis 1245, ein raumzeigerorientiertes Steuerverfahren näher beschrieben ist.

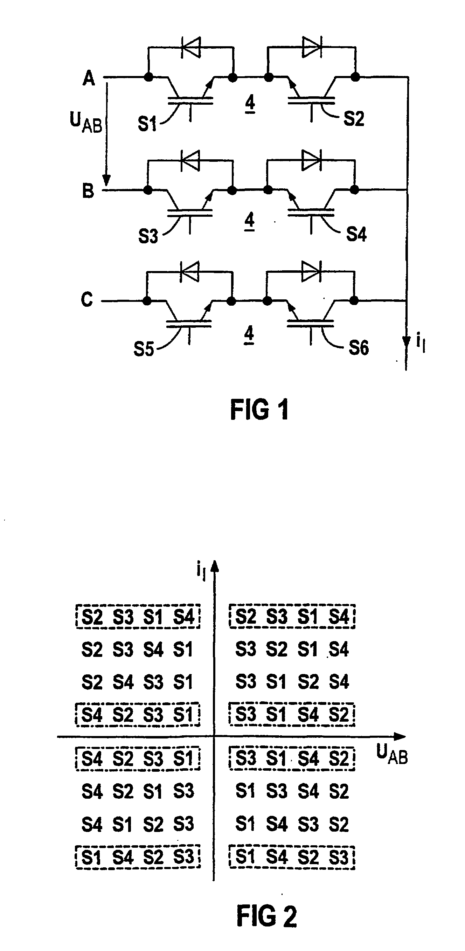

Um während der Kommutierung zu keinem Zeitpunkt einen offenen Stromkreis des Laststromes i₁ oder einen Kurzschluss zweier Eingangsphasen A, B eines Matrixumrichters zu erhalten, muss eine ganz bestimmte Schaltreihenfolge beachtet werden. In der Veröffentlichung "A Matrix converter without Diode clamped Over-voltage Protection" von J. Mahlein und M. Braun, abgedruckt im Konferenzband "IPEMC", 2000, in Beijing, China, insbesondere Kapitel 3, sind mögliche Kommutierungsfolgen für eine Ausgangsphase eines Matrixumrichters dargestellt. Anhand dieser beiden Figuren, die hier die Figuren 1 und 2 bilden, soll die Kommutierung vom Zustand Halbleiterschaltern S1 und S2 leitfähig und Halbleiterschalter S3 und S4 sperrend in den Zustand Halbleiterschalter S1 und S2 sperrend und Halbleiterschalter S3 und S4 leitfähig erläutert werden.

Gemäß der Figur 1 weist eine Ausgangsphase eines Matrixumrichters 2 drei bidirektionale Leistungsschalter 4 auf, die in einer 3x1-Schaltermatrix angeordnet sind. Wie man dieser Figur 1 entnehmen kann, weist jeder bidirektionale Leistungsschalter 4 zwei antiseriell geschaltete Halbleiterschalter S1, S2 bzw. S3, S4 bzw. S5, S6, denen jeweils eine Diode antiparallel geschaltet sind. Bei den dargestellten Halbleiterschaltern S1, S2, S3, S4, S5 und S6 handelt es sich um Insulated-Gate-Bipolar-Transistoren (IGBT). Die antiparallel geschalteten Dioden sind jedes Mal Bestandteil der zugehörigen IGBT-Module. Jeder Halbleiterschalter S1, S2, S3, S4, S5, S6 der bidirektionalen Leistungsschalter 4 dieser Phase des Matrixumrichters 2 kann einzeln und unabhängig angesteuert werden. Von einem bidirektional eingeschalteten Schalter wird gesprochen, wenn beide Halbleiterschalter S1, S2 bzw. S3, S4 bzw. S5, S6 eines bidirektionalen Leistungsschalters 4 eingeschaltet sind. Ist nur einer der beiden Halbleiterschalter S1, S2 bzw. S3, S4 bzw. S5, S6 eines bidirektionalen Leistungsschalters 4 angesteuert, so spricht man von einem unidirektional eingeschalteten Schalter.

Für die Kommutierung vom Zustand Halbleiterschalter S1 und S2 leitfähig und Halbleiterschalter S3 und S4 sperrend in den Zustand Halbleiterschalter S1 und S2 sperrend und Halbleiterschalter S3 und S4 leitend, sind in der Figur 2 alle möglichen Kommutierungsfolgen dargestellt. Diese möglichen Kommutierungsfolgen sind abhängig von der Kenntnis des Stromvorzeichens und/oder des Spannungsvorzeichens. Diese möglichen Kommutierungsfolgen lassen sich in drei Gruppen unterteilen. Die nicht markierten Schaltfolgen können nur mit Kenntnis des Spannungs- und des Stromvorzeichens durchgeführt werden. Diese Schaltfolgen gelten aufgrund dieser Doppelinformation als technisch uninteressant. Eine zweite Gruppe, die hier mit einer unterbrochenen Linie eingerahmt ist, benötigen nur das Stromvorzeichen als Information und sind vom Spannungsvorzeichen unabhängig. Die Benutzung dieser Schaltfolgen wird als stromgesteuerte Kommutierung bezeichnet. Die dritte Gruppe, die hier mit einer Punkt-Strich-Linie eingerahmt ist, ist vom Spannungsvorzeichen abhängig und kann unabhängig vom Stromvorzeichen durchgeführt werden. Bei der Verwendung dieser Schaltfolgen spricht man von spannungsgesteuerter Kommutierung.

Alle folgenden Überlegungen beschränken sich auf die spannungsgesteuerte Kommutierung.

Wird bei der spannungsgesteuerten Kommutierung aufgrund einer fehlerhaften Messung des Spannungsvorzeichens die falsche Schaltfolge gewählt, so ist ein Kurzschluss der verketteten Eingangsspannung die Folge. Dies ist technisch unproblematisch, so lange die Amplitude der Eingangsspannung geringer ist als die Durchlassspannung der Halbleiterventile im Kurzschlusspfad, die bei einer Realisierung mit IGBTs in etwa 10 Volt beträgt. Die spannungsgesteuerte Kommutierung benötigt daher eine präzise Messtechnik zur Erfassung des Spannungsvorzeichens. Die für die Steuerung des Matrixumrichters notwendige und damit ohnehin schon vorhandene analoge Messung der Eingangsspannung reicht dafür nicht aus, so dass zusätzliche Elektronik erforderlich ist. Die erforderliche hohe Präzision ist zudem anfällig und widerspricht einer anzustrebenden robusten Lösung der Kommutierungsproblematik.

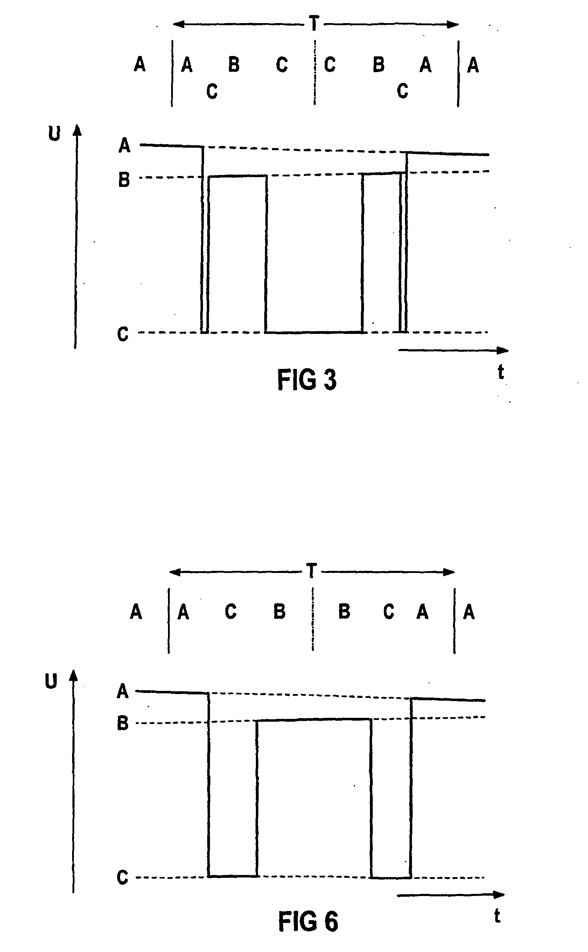

In der Veröffentlichung "A NEW TWO STEPS COMMUTATION POLICY FOR LOW COST MATRIX CONVERTERS" von M. Ziegler und W. Hofmann, abgedruckt in Conference Proceedings "PCIM 200 Europe", Nürnberg, September 2000, wird ein Steuerverfahren vorgeschlagen, bei der keine hohen Anforderungen an die Erfassung des Spannungsvorzeichens gestellt werden. Anhand der zeitlichen Darstellung einer Ausgangsphase bei Pulsweitenmodulation gemäß der Figur 3 soll erläutert werden, wie das auf der PCIM vorgestellte Steuerverfahren funktioniert.

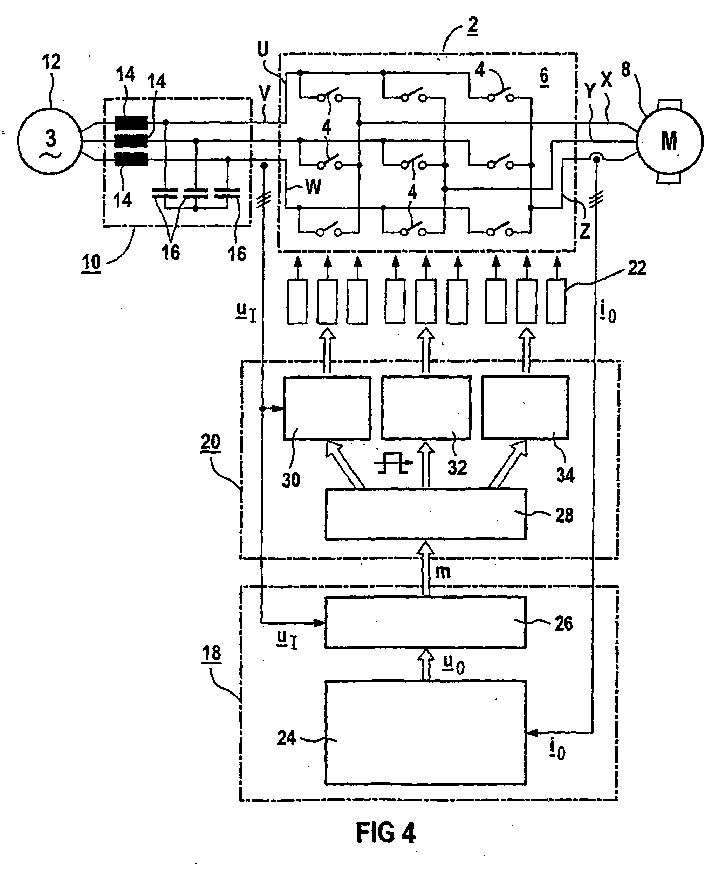

Zuvor soll jedoch anhand der Figur 4, die das Ersatzschaltbild eines Matrixumrichters 2 näher darstellt, der Aufbau des Matrixumrichters 2 näher erläutert werden.

Dieser dreiphasige Matrixumrichter 2 weist neun bidirektionale Leistungsschalter 4 auf, die in einer 3x3-Schaltermatrix 6 angeordnet sind. Durch die Anordnung der neun bidirektionalen Leistungsschalter 4 in einer 3x3-Schaltermatrix 6 kann jede Ausgangsphase X,Y,Z an eine beliebige Eingangsphase U,V,W geschaltet werden. An den Ausgangsphasen X,Y,Z des Matrixumrichters 2 ist eine induktivitätsbelastete Last 8 angeschlossen. Die Eingangsphasen U,V und W sind mit einem LC-Filter 10 verknüpft, das eingangsseitig mit einem speisenden Netz 12 verbunden ist. Dieses LC-Filter 10 weist Induktivitäten 14 und Kondensatoren 16 auf. Diese Kondensatoren 16 sind hier in Stern geschaltet, wobei eine Dreiecksschaltung auch möglich ist. Die Induktivitäten 14 sind in den Zuleitungen zu den Kondensatoren 16 angeordnet, sodass deren Ladeströme geglättet werden. Eine Phase dieses Matrixumrichters 2 weist drei bidirektionale Leistungsschalter 4 auf, die eine Ausgangsphase X bzw. y bzw. Z mit den Eingangsphasen U, V, W verbinden können. Diese Matrixumrichterphase weist eine 3x1-Schaltermatrix auf.

Außerdem zeigt dieses Ersatzschaltbild eines dreiphasigen Matrixumrichters 2 eine Steuer- und Regeleinrichtung 18, eine Modulationseinrichtung 20 und neun Ansteuereinrichtungen 22 auf. Die Steuer- und Regeleinrichtung 18 weist eine Lastregelung 24 und einen Steuersatz 26 auf. Die Lastregelung 24 wird eingangsseitig ein ermittelter Laststrom-Raumzeiger i_{O} zugeführt und generiert einen Ausgangsspannungs-Raumzeiger u_{O}. Die Lastregelung 24 kann beispielsweise eine feldorientierte Regelung sein. Der nachgeschaltete Steuersatz 26 berechnet in Abhängigkeit dieses generierten Ausgangsspannungs-Raumzeigers u_{O} und eines ermittelten Eingangsspannungs-Raumzeigers u_{I} mittels des Raumzeiger-Modulationsverfahrens Aussteuerungsgrade m. Diese Steuer- und Regeleinrichtung 18 wird vorzugsweise durch einen digitalen Signalprozessor realisiert.

Die nachgeschaltete Modulationseinrichtung 20 weist eingangsseitig einen Modulator 28 und ausgangsseitig für jede Matrixumrichterpahse eine Kommutierungssteuerung 30,32 und 34 auf. Der Modulator 28 generiert in Abhängigkeit des anstehenden Ansteuerungsgrades m pulsweitenmodulierte Signale, die jeweils in den Kommutierungssteuerungen 30,32 und 34 hinsichtlich Verriegelungszeit, Mindesteinschaltzeit und Freilauf geprüft und entsprechend bearbeitet werden. Dazu benötigen diese Kommutierungssteuerungen 30,32 und 34 jeweils das Vorzeichen der verketteten Eingangsspannungen, die durch den gemessenen Eingangsspannungs-Raumzeigers u_{I} des Matrixumrichters 2, beschrieben werden. An den Ausgängen der Kommutierungssteuerung 30 bzw. 32 bzw. 34 stehen dann Steuersignale (Ein-/ Aus-Signale) an, die mittels einer Ansteuereinrichtung 22 in ein von der Ausführungsform des bidirektionalen Leistungsschalters 4 abhängiges Gate-Signal umgewandelt werden. Diese Modulationseinrichtung 20 wird vorzugsweise durch ein Programable Logik Device, insbesondere ein Field Programmable Gate Array, realisiert.

Gemäß dem Diagramm der Figur 3 wird vom Steuersatz 26 des Matrixumrichters 2 eine Kommutierungssequenz A, B, C für eine halbe Modulationsperiode T angeboten, wobei hier eine spiegelsymmetrische Modulation (Dreieckunterschwingungsverfahren) dargestellt ist. Diesem Diagramm ist ebenfalls zu entnehmen, dass die Potentialstufen A und B zweier Eingangsspannungen des Matrixumrichters 2 nahe beieinander liegen. D. h., das Vorzeichen der verketteten Spannung zwischen den beiden Eingangsspannungen mit diesen Potentialstufen A und B ist unsicher. Dies wird im Modulator 28 erkannt. Da, wie bereits erläutert, eine fehlerhafte Messung des Spannungsvorzeichens zu einem Kurzschluss der verketteten Spannung führt, wird gemäß dem auf der PCIM vorgestellten Verfahren nicht direkt zwischen den Potentialstufen A und B kommutiert, sondern es wird eine Umgehungskommutierung ausgeführt. D. h., es wird zunächst von der Potentialstufe A auf die Potentialstufe C und unmittelbar anschließend von dieser Potentialstufe C auf die Potentialstufe B kommutiert. Dies ist in der FIG 3 dadurch zum Ausdruck gebracht worden, dass die vorgegebene Kommutierungssequenz A, B, C für eine halbe Modulationsperiode T/2 durch eine zusätzliche Potentialstufe C ergänzt worden ist. Diese zusätzliche Potentialstufe C ist in einer zweiten Reihe angeordnet, wodurch zum Ausdruck gebracht werden soll, dass es sich hier um eine Umgehungs-Kommutierung handelt, die nur dann eingefügt wird, wenn das Vorzeichen einer verketteten Eingangsspannung unsicher ist. Durch diese Umgehungs-Kommutierung können die Vorzeichen zwischen den Potentialstufen A und C sowie zwischen C und B sicher bestimmt werden, wodurch keine hohen Anforderungen an die Messtechnik gestellt werden.

Es sei hier angemerkt, dass je nach bestehender Schalterkonstellation vor der Kommutierung die mit A, B und C benannten Potentiale den tatsächlichen Eingangspotentialen U_{X}, U_{V} und U_{W} zugewiesen werden müssen, wodurch die Beschreibung allgemeingültigen Charakter erhält.

Nachteilig wirkt sich bei diesem Steuerverfahren aus, dass pro Modulationsperiode T zwei weitere Kommutierungen stattfinden, wobei die zusätzlichen Kommutierungen außerdem mit hoher Differenzspannung ausgeführt werden. Da die Höhe der Kommutierungsspannung ein Maß für die Schaltverluste darstellt, erhöhen sich die Schaltverluste bei diesem vorgstellten Steuerverfahren erheblich, woraus Nachteile für die Chipflächenauslegung und Entwärmung resultieren. Auch die Erhöhung der Anzahl der Kommutierungen innerhalb einer Modulationsperiode T erhöht die Schaltverluste. Ein weiterer Nachteil ist, dass erst im Modulator 28 bzw. in der Kommutierungssteuerung 30 bis 34 des Matrixumrichters 2 dieses Problem, nämlich die Kommutierung zwischen zwei nahe beieinander liegenden Potentialstufen, festgestellt wird.

Der Erfindung liegt nun die Aufgabe zugrunde, ein Steuerverfahren für einen Matrixumrichter anzugeben, bei dem eine Kommutierung zwischen zwei nahe beieinander liegenden Eingangsspannungen nicht mehr auftritt.

Diese Aufgabe wird erfindungsgemäß mit den Merkmalen des Anspruchs 1 gelöst.

Dadurch, dass bei Nichtübereinstimmung einer berechneten Schaltzustandsfolge mit einer Kommutierungssequenz, die in Abhängigkeit der ermittelten Potentialstufen der Eingangsspannungen aus drei möglichen Kommutierungssequenzen ausgewählt wurde, diese berechnete Schaltzustandsfolge in die ausgewählte Kommutierungssequenz überführt wird, indem die berechneten Schaltzustände sortiert werden, wird keine Kommutierungssequenz weitergereicht, bei der eine Kommutierung zwischen zwei eng beieinander liegenden Eingangsspannungen vorgesehen ist.

Durch dieses erfindungsgemäße Steuerverfahren für einen Matrixumrichter erhält man eine robuste spannungsgeführte Kommutierung, bei der die für die Steuerung des Matrixumrichters notwendige analoge Messung der Eingangsspannungen ausreichend ist. Außerdem wird hier das Kommutierungsproblem bereits in der der Modulationseinrichtung vorgeschalteten Steuer- und Regeleinrichtung gelöst. Somit ermöglicht das erfindungsgemäße Steuerverfahren einen Matrixumrichter ohne explizite Vorzeichenmessung von Eingangsspannungen oder Ausgangsströmen, lediglich auf der Basis der analogen Eingangsspannungsinformation, zu betreiben.

Außerdem treten beim erfindungsgemäßen Steuerverfahren pro Modulationsperiode nur vier Kommutierungen auf, woraus eine erhebliche Einsparung an Schaltverlusten und damit an Chipfläche und Entwärmungsaufwand resultiert.

Ferner ist das erfindungsgemäße Steuerverfahren nicht auf eine zweistufige Kommutierung beschränkt, sondern unabhängig vom Kommutierungsverfahren und daher universell anwendbar, insbesondere auch für eine vierstufige Kommutierung.

Bei einer vorteilhaften Ausführung des erfindungsgemäßen Verfahrens ist der vorbestimmte Grenzwert für die Erkennung nah benachbarter Spannungen derart gewählt, dass die ausgewählte Kommutierungssequenz jeweils für einen gesamten Eingangsspannungssektor gilt. Dies hat den Vorteil, dass sich die Ermittlung der für die Kommutierung kritischen Bereiche erheblich vereinfacht. Außerdem benötigt die Kommutierungssteuerung neben den Aussteuergraden keine zusätzlichen Informationen z.B. über das Vorzeichen der verketteten Eingangsspannungen.

Weitere vorteilhafte Ausführungen des erfindungsgemäßen Verfahrens sind den Unteransprüchen 3 und 4 zu entnehmen.

Zur weiteren Erläuterung der Erfindung wird auf die Zeichnung Bezug genommen, in der das erfindungsgemäße Verfahren schematisch veranschaulicht ist.
- Figur 1: zeigt eine Ausgangsphase eines Matrixumrichters, in der
- Figur 2: sind alle möglichen Kommutierungsfolgen für die Halbleiterschalter der bidirektionalen Leistungsschalter der Ausgangsphase nach Figur 1 in einem Strom-Spannungs-Diagramm dargestellt, die
- Figur 3: zeigt in einem Diagramm über der Zeit t eine bekannte Kommutierungssequenz einer Modulationsperiode, die
- Figur 4: zeigt ein Ersatzschaltbild eines Matrixumrichters, die
- Figur 5: zeigt eine Periode der Eingangsspannungen des Matrixumrichters nach Figur 4 in einem Diagramm über der Zeit t, in der
- Figur 6: ist in einem Diagramm über der Zeit t eine ausgewählte Kommutierungssequenz einer Modulationsperiode nach der Erfindung dargestellt, die
- Figur 7: zeigt eine Tabelle von berechneten Schaltzuständen mit zugehörigen Zeitspannen und die
- Figur 8: zeigt eine Tabelle mit den berechneten Schaltzuständen mit zugehörigen Zeitspannen nach Figur 7, die gemäß der ausgewählten Kommutierungssequenz sortiert sind.

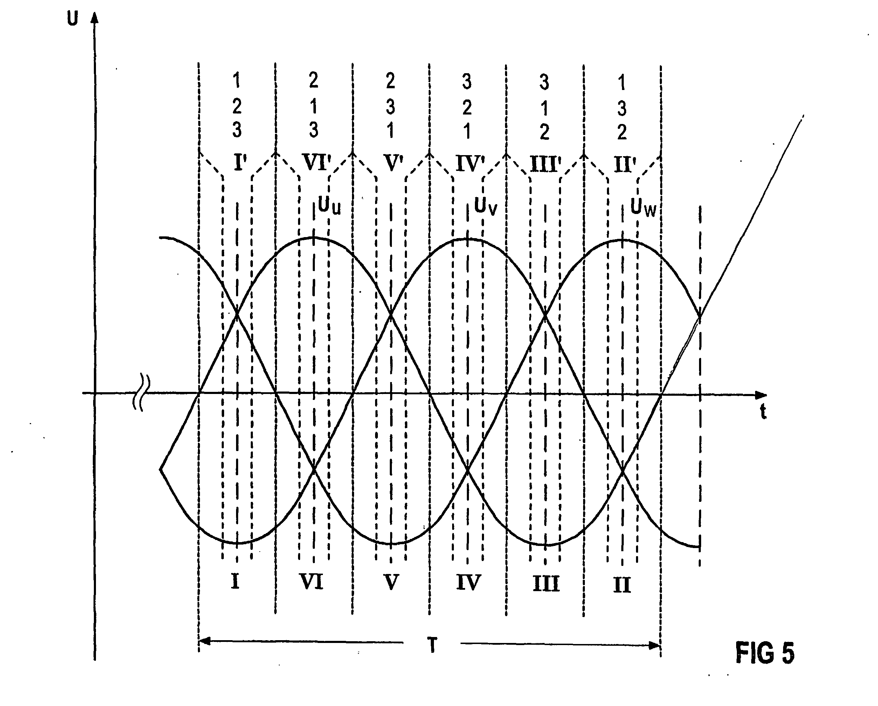

In der Figur 5 sind in einem Diagramm über der Zeit t die an den Eingängen UVW des Matrixumrichters 2 anstehenden Netzspannungen U_{U}, U_{V}, U_{W} dargestellt. Von diesen Netzspannungen U_{U}, U_{V}, U_{W} ist nur der zeitliche Verlauf einer Netzperiode dargestellt. Diese Netzperiode ist in sechs Sektoren I bis VI gemäß der Raumzeigermodulation unterteilt. Jeder Sektor I bis VI umfasst 60° el., wobei die Sektorgrenze jedes Mal mit einem Nulldurchgang einer Netzspannung U_{U} bzw. U_{V} bzw. U_{W} zusammenfällt. Innerhalb der Sektoren I,...,VI sind Bereiche I',...,VI' angegeben, die jeweils um einen Nulldurchgang einer verketteten Netzspannung gelegt sind. Die Bereichsbreiten sind durch einen vorbestimmten Grenzwert festgelegt. Dieser Grenzwert kann beispielsweise so gewählt werden, dass die Bereiche I',...,VI' mit den Sektoren I,...,VI zusammenfallen. Mit dem Grenzwert wird der Bereich für das Vorzeichen der verketteten Netzspannung festgelegt, indem das Vorzeichen unsicher ist. Je größer diese Bereiche sind, umso geringer sind die Anforderungen an eine Vorzeichenermittlung der Eingangsspannungen des Matrixumrichters 2. Sind die Bereiche I',...,VI' mit den Sektoren I,...,VI deckungsgleich, kann auf einen Grenzwert/eine Grenzwertüberprüfung vollständig verzichtet werden. Innerhalb dieser Sektoren I,...,VI sind Zahlentripple angegeben, die jeweils eine Kommutierungssequenz veranschaulichen. Dabei werden diese Ziffern der Kommutierungssequenzen von oben nach unten gelesen und bezeichnen den Index der zu wählenden Eingangsspannung (1 = Uᵤ, 2 = Uᵥ, 3 = U_{w}).

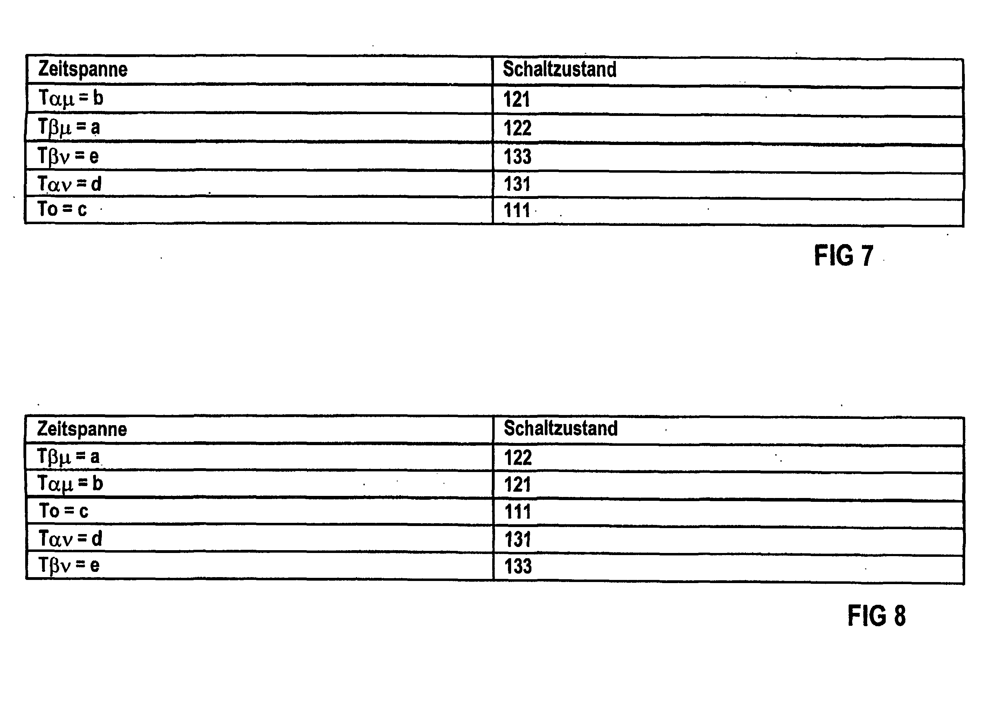

In der Figur 6 ist eine ausgewählte Kommutierungssequenz für eine halbe Modulationsperiode T angegeben, bei der keine Kommutierung zwischen zwei eng beieinander liegenden Potentialstufen zweier Eingangsspannungen des Matrixumrichters 2 stattfindet. Zwei eng beieinander liegende Potentialstufen zweier Eingangsspannungen treten im Sektor I des Diagramms nach Figur 5 in dem gemäß Figur 6 angegebenen Potentialverlauf auf. Dabei weist die Eingangsspannung U_{W} das Potential A, die Eingangsspannung U_{U} das Potential B und die Eingangsspannung U_{V} das Potential C auf. Anhand der Werte der verketteten Eingangsspannungen U_{U}, U_{V} und U_{W} wird ermittelt, welche Eingangsspannungen eng beieinander liegen.

Die möglichen Kommutierungssequenzen sind ABC, BCA und CAB. Aus diesen drei möglichen Kommutierungssequenzen wird diejenige Kommutierungssequenz ausgewählt, die eine Kommutierung zwischen zwei eng beieinander liegenden Eingangsspannungen unterbindet. Im Sektor I sind diese Spannungen die Eingangsspannungen U_{W} mit dem Potential A und die Eingangsspannung U_{U} mit dem Potential B. Somit muss eine Kommutierungssequenz ausgewählt werden, bei der die Potentiale A und B nicht direkt aufeinander folgen dürfen. Die Kommutierungssequenz, die diese Bedingung erfüllt, ist die Kommutierungssequenz BCA. Die spiegelsymmetrische Kommutierungssequenz dieser ausgewählten Kommutierungssequenz BCA ist in der Figur 6 über der Zeit t dargestellt. Wie man sieht, treten bei der ausgewählten Kommutierungssequenz BCA nur vier Kommutierungen auf, gegenüber sechs Kommutierungen bei dem auf der PCIM vorgestellten Verfahren (Figur 3).

Die Figur 7 zeigt eine Tabelle mit zwei Spalten, nämlich eine Spalte "Zeitspanne" und eine Spalte "Schaltzustand". In dieser letztgenannten Spalte sind für eine Modulationsperiode T bzw. für eine halbe Modulationsperiode T/2 vier aktive Schaltzustände 121, 122, 133 und 131 und ein Schaltzustand 111 eingetragen. Die aktiven Schaltzustände 121, 122, 133 und 131 generieren einen Ausgangs-Spannungs-Raumzeiger uₒ, der verschieden von Null ist. Der Schaltzustand 111 generiert einen Ausgangs-Spannungs-Raumzeiger uₒ mit der Amplitude Null.

Der Schaltzustand des Matrixumrichters 2 wird gemäß dieser Tabelle durch einen Zahlentripple, beispielsweise 122, beschrieben. Dazu gibt die erste Ziffer an, mit welcher Eingangsphase die erste Ausgangsphase X des Matrixumrichters 2 verbunden werden soll bzw. ist. Die zweite Ziffer gibt an, mit welcher Eingangsphase die zweite Ausgangsphase Y des Matrixumrichters 2 verbunden werden soll bzw. ist. Die dritte Ziffer gibt die Verbindung der dritten Ausgangsphase Z des Matrixumrichters 2 mit einer Eingangsphase an. D. h., dass gemäß dem Schaltzustand 122 die erste Ausgangsphase X mit der Netzspannung U_{U}, die zweite Ausgangsphase Y mit der Netzspannung U_{V} und die dritte Ausgangsphase Z des Matrixumrichters 2 mit der Netzspannung U_{W} verbunden werden soll. Wie lange dieser Schaltzustand anstehen soll, gibt die zum Schaltzustand zugehörige Zeitspanne Tβµ = a an. Wenn der Schaltzustand 122 ausgeführt wird, so werden die entsprechenden bidirektionalen Leistungsschalter 4 des Matrixumrichters 2 geschlossen.

Die in der Figur 7 gezeigte Tabelle zeigt ein Rechenbeispiel aus der Veröffentlichung von Huber, Borojevi 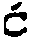 , insbesondere die Tabelle III und die Abbildung 9, welche unter der Annahme eines Eingangs-Leistungsfaktors cosϕ von Eins im Eingangsspannungssektor I zustande kommt.

In der Figur 8 ist eine Tabelle dargestellt, die die berechneten Schaltzustände 121, 122, 133, 131 und 111 mit den zugehörigen Zeitspannen a, b, d, e und c nach Figur 7 beinhalten. Gegenüber der Tabelle nach Figur 7 sind die Schaltzustände in der Tabelle nach Figur 8 umsortiert. Wie bereits erwähnt, gehören die Schaltzutände der Tabelle nach Figur 7 unter der Annahme eines Leistungsfaktors cosϕ von Eins nach Huber und Borojevic zum Sektor VI. In diesem Sektor VI ist nach Figur 5 eine Kommutierungssequenz 213 angegeben. Diese Kommutierungssequenz lautet unter Berücksichtigung der Spiegelsymmetrie mit Potentialstufen A, B, C folgendermaßen: CAB. Ein Vergleich der ausgewählten Kommutierungssequenz CAB = 213 mit der Kommutierungssequenz der berechneten Schaltzustände der Tabelle nach Figur 7 zeigt, dass keine Übereinstimmung vorhanden ist. Die Tatsache, dass die Reihenfolge der gewünschten Potentiale innerhalb einer Modulationsperiode T beliebig vertauscht werden können, ohne dass sich das Ergebnis der mittleren Ausgangsspannung innerhalb einer Modulationsperiode T ändert, können die berechneten Schaltzustände der Tabelle nach Figur 7 umsortiert werden. D. h., die berechneten Schaltzustände werden so aneinander gereiht, dass sich die ausgewählte Kommutierungssequenz CAB = 213 einstellt. Die Tabelle nach Figur 8 zeigt diese Schaltzustände für eine halbe Modulationsperiode T. Soll diese ausgewählte Kommutierungssequenz CAB = 213 für den gesamten Sektor VI gelten, so ist der vorbestimmte Grenzwert für den Bereich VI' so zu wählen, dass dieser mit dem Sektor VI deckungsgleich ist.

Das erfindungsgemäße Steuerverfahren für einen Matrixumrichter 2 sieht vor, dass wenigstens im Bereich um die Nulldurchgänge der verketteten Eingangsspannungen von einem Steuersatz 26 nur eine Kommutierungssequenz ausgewählt wird, die die Kommutierung zwischen zwei eng beieinander liegenden Eingangsspannungen ausschließt, wodurch das Risiko eines Kommutierungskurzschlusses vermieden wird. Wird durch den Steuersatz eine andere der drei möglichen Kommutierungssequenzen angeboten, so wird dieser durch Umsortierung der berechneten Schaltzustände in die ausgewählte Kommutierungssequenz abgewandelt.

Dieses erfindungsgemäße Steuerverfahren für einen Matrixumrichter 2 weist gegenüber dem auf der PCIM vorgestellten Verfahren folgende Vorteile auf:
1. Das erfindungsgemäße Verfahren benötigt keine explizite Vorzeichenmessung mehr. Die analoge Erfassung der Eingangsspannungen U_{U}, U_{V} und U_{W}, die zur Ermittlung der Pulsweiten für den Modulator 28 ohnehin notwendig ist, reicht völlig aus. Alle für die Kommutierungssteuerung notwendigen Informationen sind in der Kommutierungsfolge enthalten, so dass keine zusätzlichen Spannungsvorzeichensignale an die Kommutierungssteuerung weitergeleitet werden müssen. Das erfindungsgemäße Verfahren ermöglicht daher erstmals einen Matrixumrichter ohne Vorzeichenmessung von Eingangsspannungen oder Ausgangs strömen, lediglich auf der Basis der analogen Eingangsspannungsinformation, zu betreiben. Damit vereinfacht sich die Elektronik und eine preiswerte Realisierung eines Matrixumrichters wird ermöglicht.
2. Beim erfindungsgemäßen Verfahren treten pro Modulationsperiode lediglich vier Kommutierungen auf, so dass eine erhebliche Einsparung an Schaltverlusten und damit an Chipfläche und Entwärmungsaufwand resultiert. Das erfindungsgemäße Verfahren ist unabhängig vom Kommutierungsverfahren und daher universell anwendbar, insbesondere auch für eine vierstufige Kommutierung.
3. Das erfindungsgemäße Verfahren erzielt eine robuste, d. h. von präzisen Messungen unabhängige Kommutierungssteuerung.
4. Im erfindungsgemäßen Verfahren werden Fehler in der mittleren Ausgangsspannung über eine Modulationsperiode vermieden, da keine Umwegkommutierung stattfindet.

## Patentansprüche

1. Verfahren zur Steuerung eines Matrixumrichters (2) mit neun in einer 3x3-Schaltermatrix (6) angeordneten bidirektionalen Leistungsschaltern (4), wobei in Abhängigkeit eines berechneten Ausgangsspannungs-Raumzeigers (U₀) des Matrixumrichters (2) Schaltzustände mit zugehörigen Zeitspannen (a,b,c,d,e) jeweils für eine halbe Modulationsperiode (T) in einer berechneten Kommutierungssequenz bestimmt werden, wobei in Abhängigkeit ermittelter Eingangsspannungen (Uᵤ,Uᵥ,U_{w}) und eines vorbestimmten Grenzwertes eine Kommutierungssequenz jeweils für eine halbe Modulationsperiode (T) ausgewählt wird, die sicherstellt, dass keine Kommutierung zwischen zwei potentialmäßig eng beieinander liegenden Eingangsspannungen (Uᵤ,U_{w};U_{w},Uᵥ;Uᵥ,Uᵤ;Uᵤ,U_{w};U_{w},Uᵥ;Uᵥ,Uᵤ) stattfindet, wobei diese ausgewählte Kommutierungssequenz mit der berechneten Kommutierungssequenz verglichen wird, und wobei bei Nichtübereinstimmung die Schaltzustände mit zugehörigen Zeitspannen (a,b,c,d,e) derart umsortiert werden, dass deren Kommutierungssequenz mit der ausgewählten Kommutierungssequenz übereinstimmt.

2. Verfahren nach Anspruch 1,
**dadurch gekennzeichnet,**
**dass** der vorbestimmte Grenzwert derart gewählt wird, dass die ausgewählte Kommutierungssequenz jeweils für einen gesamten Eingangsspannungssektor (I,...VI) gilt.

3. Verfahren nach Anspruch 1,
**dadurch gekennzeichnet,**
**dass** der vorbestimmte Grenzwert derart gewählt ist, dass die ausgewählte Kommutierungssequenz nur für einen Bereich um den Wert Null einer verketteten Eingangsspannung gilt.

4. Verfahren nach Anspruch 3,
**dadurch gekennzeichnet,**
**dass** in dem verbleibenden Bereich eines jeden Eingangsspannungssektors (I,...VI) eine beliebige Kommutierungssequenz wählbar ist.

## Claims

1. Method for controlling a matrix converter (2) with nine bidirectional power switches (4) arranged in a 3x3 switch matrix (6), whereby depending on a calculated output voltage space vector (Uo) of the matrix converter (2) switching states with associated time intervals (a,b,c,d,e) for each half modulation period (T) in a calculated commutation sequence are determined, whereby depending on measured input voltages (Uᵤ,Uᵥ,U_{w}) and a predetermined limit value a commutation sequence is selected for a half modulation period (T) so as to prevent commutation between two input voltages having close potentials (Uᵤ,U_{w};U_{w} Uᵥ;Uᵥ,Uᵤ;Uᵤ,U_{w};U_{w},Uᵥ;Uᵥ,Uᵤ), whereby this selected commutation sequence is compared with the calculated commutation sequence, and whereby if there is a difference the switching states with associated time intervals (a,b,c,d,e) are rearranged so as to make their commutation sequence identical to the selected commutation sequence.

2. Method according to Claim 1, **characterised in that** the predetermined limit value is selected so that the selected commutation sequence is valid for an entire input voltage sector (I,...VI) in each case.

3. Method according to Claim 1, **characterised in that** the predetermined limit value is selected so that the selected commutation sequence is valid only for a region about a value of Zero of a linked input voltage.

4. Method according to Claim 3, **characterised in that** any commutation sequence can be selected in the remaining region of an input voltage sector (I,...VI).

## Revendications

1. Procédé de commande d'un convertisseur matriciel (2) comportant neuf disjoncteurs bidirectionnels (4) montés dans une matrice de disjoncteurs 3 x 3 (6), dans lequel on détermine en fonction d'un vecteur spatial de tension de sortie calculé (u_{O}) du convertisseur matriciel (2) des états de commutation avec laps de temps associés (a, b, c, d, e) respectivement pour une moitié de période de modulation (T) dans une séquence de commutation calculée, dans lequel on sélectionne en fonction de tensions d'entrée déterminées (U_{U}, U_{V}, U_{W}) et d'une valeur limite prédéterminée une séquence de commutation respectivement pour une moitié de période de modulation (T), laquelle séquence de commutation garantit qu'il ne se produit aucune commutation entre deux tensions d'entrée aux potentiels étroitement proches l'un de l'autre (U_{U}, U_{W} ; U_{W}, U_{V} ; U_{V}, U_{U} ; U_{U}, U_{W} ; U_{W}, U_{V} ; U_{V}, U_{U}), dans lequel on compare cette séquence de commutation sélectionnée à la séquence de commutation calculée et dans lequel, en cas d'inégalité, on réordonne les états de commutation avec laps de temps associés (a, b, c, d, e) de telle sorte que leur séquence de commutation coïncide avec la séquence de commutation sélectionnée.

2. Procédé selon la revendication 1,
**caractérisé par le fait que** l'on choisit la valeur limite prédéterminée de telle sorte que la séquence de commutation sélectionnée est valable respectivement pour tout un secteur de tension d'entrée (I à VI).

3. Procédé selon la revendication 1,
**caractérisé par le fait que** l'on choisit la valeur limite prédéterminée de telle sorte que la séquence de commutation sélectionnée est valable seulement pour une zone autour de la valeur nulle d'une tension d'entrée composée.

4. Procédé selon la revendication 3,
**caractérisé par le fait que**, dans la zone restante de chaque secteur de tension d'entrée (I à VI), on peut choisir une séquence de commutation quelconque.
